# EUROPÄISCHE PATENTANMELDUNG

(11) **EP 2 644 916 A2**
(43) Veröffentlichungstag der Anmeldung: **02.10.2013**
(21) Anmeldenummer: 13161211.1
(22) Anmeldetag: 27.03.2013
(51) Int. Cl.: F16C 29/08

(54) **Dichtungsplatte für einen Profilschienenwagen, Zusammenstellungsprodukt und Profilschienenwagen**

(30) Priorität: 28.03.2012 DE 102012205003
(71) Anmelder: Aktiebolaget SKF, 41550 Göteborg (SE)
(72) Erfinder: Edelmann, Ludwig, 97717 Sulzthal (DE); Jeschka, Erwin, 97711 Maßbach (DE); Wu, Dennis, 22005, ROC New Taipei City (TW); Weng, Nerol, 975 Fenglin Township (TW)
(74) Vertreter: Schonecke, Mitja

(57) **Zusammenfassung**

Eine Dichtungsplatte (150) gemäß einem Ausführungsbeispiel für einen Profilschienenwagen (120), der ausgebildet ist, um auf einer Profilschiene (110) linear beweglich zu sein, und wobei der Profilschienenwagen (120) wenigstens einen Lastbereich (180) umfasst, in dem eine Mehrzahl von Wälzkörpern (170) zwischen einer Laufbahn (210) des Profilschienenwagens (120) und einer Gegenlaufbahn (220) der Profilschiene (110) angeordnet sind, umfasst eine Ausnehmung (240), die derart ausgebildet ist, sodass sich in einem an dem Profilschienenwagen (120) montierten Zustand der Dichtungsplatte (150) die Profilschiene (110) durch die Ausnehmung (240) hindurch erstrecken kann, und wenigstens eine Aufnahmestruktur (300), die derart angeordnet und ausgebildet ist, um eine Dichtstruktur (270) derart aufzunehmen, dass in dem aufgenommenen Zustand die Dichtstruktur (270) mit der Gegenlaufbahn (220) der Profilschiene (110) in Kontakt steht, wobei die Dichtungsplatte (150) derart ausgebildet ist, dass diese zu der Gegenlaufbahn (220) einen Spalt aufweist, wenn die Dichtstruktur (270) nicht an der Aufnahmestruktur (300) aufgenommen ist. Eine Dichtungsplatte (150) gemäß einem Ausführungsbeispiel kann so eine Verbesserung der Flexibilität einer Dichtungsanpassung bei einem Profilschienenwagen (120) mit technisch einfachen Mitteln ermöglichen.

## Beschreibung

Ausführungsbeispiele beziehen sich auf eine Dichtungsplatte für einen Profilschienenwagen, ein Zusammenstellungsprodukt und einen Profilschienenwagen, wie sie beispielsweise bei Profilschienenführungen im Bereich von Linearsystemen zum Einsatz kommen können.

In vielen Bereichen des Maschinen- und Anlagenbaus tritt die Herausforderung auf, einzelne Komponenten oder Baugruppen relativ zueinander entlang eines Bewegungspfads zu bewegen. Hierfiir werden je nach konkreter Anforderung häufig Linearführungen oder andere Linearsysteme eingesetzt, die beispielsweise auf Profilschienenführungen basieren. Bei einer Profilschienenführung ist typischerweise wenigstens ein Profilschienenwagen auf einer oder mehreren Profilschienen entlang einer Erstreckungsrichtung der Profilschiene oder mehrerer Profilschienen linear beweglich.

Profilschienenführungen werden hierbei unter höchst unterschiedlichen Randbedingungen eingesetzt, bei denen entsprechend auch höchst unterschiedliche Anforderungen an die Profilschiene und den Profilschienenwagen gestellt werden. So können Profilschienenführungen beispielsweise ebenso unter aggressiven Umweltbedingungen ebenso eingesetzt werden, wie in vergleichsweise sauberen, wenig belasteten Bereichen. Entsprechend besteht vonseiten des Einsatzes der Profilschienenführungen ein großer Bedarf unterschiedlicher Ausfertigungen, bei denen beispielsweise unterschiedliche Dichtungskonzepte umgesetzt werden, um den unterschiedlichen Umwelt- und Einsatzbedingungen Rechnung tragen zu können.

So benötigen manche Kunden entsprechender Profilschienenführungen sogenannte Leichtlaufdichtungen, bei denen eine Dichtfunktion eher im Hintergrund steht, bei denen gegebenenfalls sogar eine Dichtfunktion eine vernachlässigbare Eigenschaft darstellt. So kann unter manchen Einsatzbedingungen beispielsweise eine Minimierung einer Startreibung, die auftritt, bevor sich der entsprechende Profilschienenwagen auf der Profilschiene bewegt, auf einen möglichst kleinen oder möglichst minimalen Wert im Vordergrund stehen.

Anstelle einer entsprechenden Leichtlaufdichtung werden zum Teil Kombinationen aus Abschlussplatten ohne Dichtfunktion und sogenannte Vorschaltdichtungen mit gegebenenfalls kleinerer Dichtfunktion - z. B. anstelle von zwei Dichtlippen mit nur einer einzigen Dichtlippe - angeboten. Hierdurch erhöht sich jedoch gegebenenfalls die Komplexität eines solchen Profilschienenwagens, sodass dieser insgesamt in Herstellung und Vertrieb teurer werden kann. Ebenso kann sich gegebenenfalls ein Längenmaß des gesamten Wagens vergrößern, beispielsweise um eine doppelte Dicke der zuvor genannten Vorschaltdichtung größer werden. So werden gegebenenfalls auch komplexe Dichtungspakete implementiert, die sich an dem jeweiligen Kundenwunsch orientieren und bei Zusammenbau des Profilschienenwagens montiert werden. Aber auch bei diesen wächst typischerweise ein Längenmaß des gesamten Profilschienenwagens und eine Komplexität seiner Implementierung deutlich an, was zu zusätzlichen Kosten und gegebenenfalls zu weiteren Einschränkungen hinsichtlich ihrer Einsetzbarkeit führen kann.

Es besteht daher ein Bedarf daran, eine Verbesserung der Flexibilität einer Dichtungsanpassung bei einem Profilschienenwagen mit technisch einfachen Mitteln zu erzielen.

Diesem Bedarf tragen unabhängig voneinander eine Dichtungsplatte gemäß Patentanspruch 1, eine Dichtungsplatte gemäß Patentanspruch 6, ein Kombinationsprodukt gemäß Patentanspruch 5 und ein Profilschienenwagen gemäß Patentanspruch 10 Rechnung.

Eine Dichtungsplatte gemäß einem Ausführungsbeispiel für einen Profilschienenwagen, der Profilschienenwagen ausgebildet ist, um auf einer Profilschiene linear beweglich zu sein und wenigstens einen Lastbereich umfasst, in dem eine Mehrzahl von Wälzkörpern zwischen einer Laufbahn des Profilschienenwagens und einer Gegenlaufbahn der Profilschiene angeordnet sind, umfasst eine Ausnehmung, die derart ausgebildet ist, sodass sich in einem an dem Profilschienenwagen montierten Zustand der Dichtungsplatte die Profilschiene durch die Ausnehmung hindurch erstrecken kann, und wenigstens eine Aufnahmestruktur, die derart angeordnet und ausgebildet ist, um eine Dichtstruktur derart aufzunehmen, dass in dem aufgenommenen Zustand die Dichtstruktur mit der Gegenlaufbahn der Profilschiene in Kontakt steht. Die Dichtungsplatte ist hierbei derart ausgebildet, dass diese zu der Gegenlaufbahn einen Spalt aufweist, wenn die Dichtstruktur nicht an der Aufnahmestruktur aufgenommen ist.

Einer Dichtungsplatte gemäß einem Ausführungsbeispiel liegt so die Erkenntnis zugrunde, dass eine Verbesserung der Flexibilität der Dichtungsanpassung mit technisch einfachen Mitteln dadurch erzielt werden kann, dass die wenigstens eine Aufnahmestruktur vorgesehen wird, die gerade so ausgebildet ist, um die Dichtstruktur mit der beschriebenen Dichtwirkung aufzunehmen. Hierdurch kann eine Dichtung des Profilschienenwagens gegenüber der Gegenlaufbahn realisiert werden, wenn die Dichtstruktur auf der Aufnahmestruktur aufgebracht ist. Ist die Dichtstruktur hingegen nicht aufgenommen, so weist die Dichtungsplatte zu der betreffenden Gegenlaufbahn den Spalt auf, sodass die Dichtungsplatte gegenüber der Profilschiene eine Spaltdichtung umsetzt. Durch das Aufnehmen bzw. Entfernen der Dichtungsstruktur kann so mit ein und derselben Dichtungsplatte gemäß einem Ausführungsbeispiel eine berührende und eine nicht berührende, beispielsweise als Spaltdichtung implementierte, Dichtung umgesetzt werden.

Eine Dichtungsplatte gemäß einem Ausführungsbeispiel für einen solchen, zuvor beschriebenen Profilschienenwagen kann alternativ oder ergänzend eine Ausnehmung, die derart ausgebildet ist, sodass sich in einem an dem Profilschienenwagen montierten Zustand der Dichtungsplatte die Profilschiene durch die Ausnehmung hindurch erstrecken kann, und wenigstens eine entfernbare Dichtstruktur umfassen, die derart angeordnet ist, dass diese mit der Gegenlaufbahn der Profilschiene in Kontakt steht, wobei die Dichtungsplatte derart ausgebildet ist, dass diese zu der Gegenlaufbahn einen Spalt aufweist, wenn die Dichtstruktur von der Dichtungsplatte entfernt ist.

Auch diesem Ausführungsbeispiel einer Dichtungsplatte liegt so die Erkenntnis zugrunde, dass durch das Entfernen einer vorgesehenen Dichtstruktur eine Verbesserung der Flexibilität einer Dichtungsanpassung der Dichtungsplatte mit technisch einfachen Mitteln erzielbar sein kann. So kann auch hier bei nicht entfernter Dichtstruktur eine berührende Dichtung, bei entfernter Dichtstruktur eine berührungslose, beispielsweise als Spaltdichtung implementierte, Dichtung realisiert werden.

Hierdurch kann also im Falle einer Dichtungsplatte gemäß einem Ausführungsbeispiel, die die Dichtstruktur umfasst, eine Leichtlaufdichtung implementiert werden, bei der eine Dichtwirkung insbesondere gegenüber der Gegenlaufbahn der Profilschiene realisiert wird.

Ausführungsbeispiele umfassen ferner ein Kombinationsprodukt umfassend eine Dichtungsplatte gemäß einem Ausführungsbeispiel und wenigstens eine entsprechende Dichtstruktur, die beispielsweise durch die Aufnahmestruktur aufgenommen werden kann. Ebenso umfassen Ausführungsbeispiele einen Profilschienenwagen mit wenigstens einem Lastbereich, wobei der Lastbereich eine Laufbahn umfasst, die derart ausgebildet ist, dass zwischen dieser und einer Gegenlaufbahn einer Profilschiene eine Mehrzahl von Wälzkörpern derart angeordnet werden kann, sodass der Profilschienenwagen auf der Profilschiene linear beweglich ist und die Wälzkörper der Mehrzahl von Wälzkörpern an der Laufbahn und der Gegenlaufbahn bei einer Bewegung abrollen. Anders ausgedrückt sind die Wälzkörper der Mehrzahl von Wälzkörpern zwischen Laufbahn und Gegenlaufbahn angeordnet. Ein solcher Profilschienenwagen gemäß einem Ausführungsbeispiel umfasst wenigstens eine Dichtungsplatte gemäß einem Ausführungsbeispiel, wie sie zuvor und im Folgenden beschrieben wird.

Unabhängig davon, ob bei einer Dichtungsplatte gemäß einem Ausführungsbeispiel die Dichtstruktur mittels der Aufnahmestruktur aufnehmbar oder bereits vorhanden und entfernbar ist, können Ausführungsbeispiele der entsprechenden Dichtungsplatte unabhängig voneinander mit den nachfolgenden einzelnen konstruktiven Merkmalen ausgestattet werden, sofern sich nichts explizit Gegenteiliges aus dem technischen Zusammenhang ergibt.

Bei einer Dichtungsplatte gemäß einem Ausführungsbeispiel kann die Ausnehmung derart ausgebildet sein, dass diese zu der Profilschiene berührungsfrei an dem Profilschienenwagen anbringbar ist. Hierdurch kann also eine Dichtungsplatte umgesetzt werden, bei der nur bei entfernter Dichtstruktur bzw. nicht aufgenommener Dichtstruktur überhaupt ein Kontakt zu der Profilschiene besteht. Es kann so über die Dichtungsplatte eine reine Spaltdichtung implementierbar sein, wenn die Dichtungsplatte gerade die Dichtstruktur nicht umfasst. Hierdurch kann also beispielsweise zulasten einer Dichtung ein Widerstand des Profilschienenwagens, der durch die Dichtungsplatte gegebenenfalls bewirkt wird, reduziert, gegebenenfalls sogar vollständig vermieden werden.

So kann bei einer solchen Dichtungsplatte die Ausnehmung zu der Profilschiene einen Abstand von höchstens 2 mm, höchstens 1,5 mm, höchsten 1 mm oder höchstens 0,5 mm aufweisen.

Eine Dichtungsplatte gemäß einem Ausführungsbeispiel kann hierbei derart ausgebildet sein, dass der Spalt in dem nicht aufgenommenen Zustand bzw. in dem Zustand, in dem die Dichtstruktur entfernt ist, höchstens 2 mm beträgt. Bei anderen Ausführungsbeispielen kann der Spalt höchstens 1,5 mm, höchstens 1 mm oder höchstens 0,5 mm betragen. Hierdurch kann also eine gezielte Wirkung als Spaltdichtung implementiert werden.

Eine Dichtungsplatte gemäß einem Ausführungsbeispiel, bei der die Dichtstruktur entfernbar ist, kann ferner derart ausgebildet sein, um nach einem Entfernen der Dichtstruktur wieder eine oder die gleiche Dichtstruktur an der Dichtungsplatte befestigbar zu machen. Hierdurch kann also auch ohne den Austausch einer Dichtungsplatte diese gegebenenfalls an eine geänderte Betriebs-, Umwelt- oder sonstige Einsatzbedingung anpassbar sein. Hierdurch kann eine Flexibilität hinsichtlich der Dichtungsanpassung also gegebenenfalls weiter verbessert werden. So kann eine solche Dichtungsplatte beispielsweise wenigstens eine Aufnahmestruktur umfassen, die derart angeordnet und ausgebildet ist, um eine Dichtstruktur aufzunehmen oder wieder aufzunehmen, sodass in dem aufgenommenen Zustand die Dichtstruktur mit der Gegenlaufbahn der Profilschiene in Kontakt steht.

Bei einer Dichtungsplatte gemäß einem Ausführungsbeispiel, die eine Aufnahmestruktur umfasst, kann die Aufnahmestruktur einen wenigstens abschnittsweise zylinderförmigen Vorsprung aufweisen, der ausgebildet ist, um eine Dichtstruktur mit einer runden Öffnung, beispielsweise einen O-Ring, einen X-Ring oder einen W-Ring aufzunehmen. Hierdurch kann es gegebenenfalls möglich sein, handelsübliche Dichtstrukturen, wie einen O-Ring mit einer einzigen Dichtfläche in Form einer Dichtkante, einen X-Ring mit zwei Dichtflächen in Form zweier Dichtkanten oder einen W-Ring mit auf einer Seite zwei und auf der anderen drei Dichtflächen zu implementieren, die wiederum als Dichtkanten umgesetzt sind. Diese können gegebenenfalls in unterschiedlichen Härten, beispielsweise Shore-Härten, implementierbar sein, sodass eine noch flexiblere Dichtungsanpassung mit technisch einfachen Mitteln realisierbar sein kann.

Bei einer solchen Dichtungsplatte kann der Vorsprung also derart ausgebildet sein, dass dieser eine formschlüssige, kraftschlüssige und/oder stoffschlüssige Verbindung zu der Dichtstruktur ermöglicht. Im Falle einer stoffschlüssigen Verbindung oder einer wenigstens teilweise stoffschlüssigen Verbindung kann diese gegebenenfalls nicht mehr oder zumindest nicht mehr hinsichtlich der stoffschlüssigen Verbindung wieder herstellbar sein. Hierbei kommt eine kraftschlüssige oder reibschlüssige Verbindung durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit insbesondere eine Normalkraftkomponente zwischen den beiden Verbindungspartnern voraus.

Bei einer solchen Dichtungsplatte kann der Vorsprung der Aufnahmestruktur beispielsweise pilzförmig ausgestaltet sein, der an einer der Dichtungsplatte abgewandten Seite einen weiteren Abschnitt mit einem größeren Durchmesser als dem des zylinderförmigen Abschnitts aufweist. Hierdurch kann die entsprechende Dichtstruktur unmittelbar auf die entsprechende Aufnahmestruktur aufklickbar bzw. aufstülpbar sein und so eine kraft- und/oder formschlüssige Verbindung mit dieser schaffen.

Eine Dichtungsplatte gemäß einem Ausführungsbeispiel kann eine Mehrzahl von Aufnahmestrukturen aufweisen, die derart ausgebildet sind, dass jede der Aufnahmestrukturen bei einer Montage an einem Profilschienenwagen mit einer Mehrzahl von Lastbereichen und einer Mehrzahl von Laufbahnen im Zusammenspiel mit einer Profilschiene mit einer Mehrzahl von Gegenlaufbahnen eine Dichtstruktur derart aufnehmen kann, dass diese in dem aufgenommenen Zustand mit der betreffenden Gegenlaufbahn in Kontakt steht und in einem nicht aufgenommenen Zustand zu dieser einen Spalt aufweist. Entsprechend kann eine solche Dichtungsplatte, jedoch auch eine andere Dichtungsplatte, die keine entsprechenden Aufnahmestrukturen umfasst, ergänzend oder alternativ eine Mehrzahl von Dichtstrukturen aufweisen, die entsprechend derart ausgebildet sind, dass jede der Dichtstrukturen bei einer Montage an einem Profilschienenwagen mit einer Mehrzahl von Lastbereichen und einer Mehrzahl von Laufbahnen im Zusammenspiel mit einer Profilschiene mit einer Mehrzahl von Gegenlaufbahnen in dem nicht entfernten Zustand mit der betreffenden Gegenlaufbahn in Kontakt steht und in einem entfernten Zustand zu einem Spalt führt. Es kann also bei einer solchen Dichtungsplatte nicht nur eine einzelne Gegenlaufbahn mithilfe einer solchen Dichtstruktur berührend abgedichtet bzw. für eine entsprechende Dichtung durch das Vorsehen der entsprechenden Aufnahmestruktur vorbereitet sein, dieses gilt selbstverständlich auch für gegebenenfalls mehrere Gegenlaufbahnen, wobei jedoch bei Weitem nicht alle Gegenlaufbahnen mit einer entsprechenden Dichtstruktur versehen sein müssen. Hierdurch kann also die Dichtungsanpassungsfähigkeit einer solchen Dichtungsplatte gegebenenfalls weiter verbessert werden, ohne technisch komplexe und damit teure Komponenten implementieren zu müssen.

Bei einer Dichtungsplatte gemäß einem Ausführungsbeispiel kann so die Dichtstruktur eine einzelne oder auch eine Mehrzahl von Dichtflächen aufweisen, die derart angeordnet sind, dass diese in dem montierten Zustand der Dichtungsplatte mit der Gegenlaufbahn in Kontakt stehen. Die Dichtflächen können hierbei beispielsweise als Dichtkanten oder Dichtlippen umgesetzt sein. Durch das Vorsehen einer Mehrzahl von Dichtflächen kann so gegebenenfalls eine Dichtwirkung verbessert werden, sodass - je nach konkreter Implementierung der Dichtstruktur - hierdurch die Anpassungsfähigkeit der Dichtungsplatte an die herrschenden Dichtungsanforderungen gegebenenfalls mit technisch einfachen Mitteln weiter verbessert werden kann. Die Dichtflächen können hierbei beispielsweise entlang einer Erstreckungsrichtung der Profilschiene, die im Zusammenhang mit dem Profilschienenwagen zum Einsatz kommen soll, für den die Dichtungsplatte bestimmt ist, voneinander ausschließlich oder zumindest teilweise beabstandet sein. Anders ausgedrückt können die Dichtflächen entlang einer Richtung im Wesentlichen senkrecht zu einer Ausnehmungsfläche der Ausnehmung beabstandet sein.

Bei einer Dichtungsplatte gemäß einem Ausführungsbeispiel kann die Dichtstruktur wenigstens eine Dichtfläche, also beispielsweise wenigstens eine Dichtkante oder wenigstens eine Dichtlippe, mit einer einem Profil der Gegenlaufbahn angepassten Querschnittsform aufweisen. Hierdurch kann gegebenenfalls eine linienförmige Berührung zwischen der Dichtstruktur und der Gegenlaufbahn erzielt werden, sodass hierdurch gegebenenfalls die Dichtwirkung wiederum verbessert werden kann. Hierdurch kann also auch wiederum die Flexibilität der Dichtungsanpassung durch den Einsatz technisch einfacher Mittel verbessert werden. So kann beispielsweise im Falle kugelförmiger Wälzkörper und einer entsprechenden kreisbogensegmentförmigen Ausgestaltung des Profils der Gegenlaufbahn eine wenigstens abschnittsweise ringförmige Dichtfläche, beispielsweise eine Dichtkante oder Dichtlippe, im Rahmen der Dichtstruktur implementiert werden. Im Falle anders ausgestalteter Wälzkörper, beispielsweise kegelförmiger, rollenförmiger oder nadelförmiger Wälzkörper, bei denen die Gegenlaufbahn der Profilschienen ein im Wesentlichen geradenabschnittsförmiges Profil aufweisen, kann die wenigstens eine Dichtfläche entsprechend ebenfalls geradenabschnittsförmig ausgestaltet sein. Bei tonnenförmigen Wälzkörpern können entsprechend die Laufbahn und die Gegenlaufbahn gekrümmte Profile aufweisen. In diesem Fall kann auch die wenigstens eine Dichtfläche ein solches, wenigstens abschnittsweise gekrümmtes Profil umfassen.

Bei einer Dichtungsplatte gemäß einem Ausführungsbeispiel kann so die Aufnahmestruktur und/oder die Dichtstruktur gegebenenfalls einstückig ausgebildet sein. Hierbei wird unter einer einstückig ausgebildeten Komponente eine solche verstanden, die genau aus einem zusammenhängenden Materialstück gefertigt ist. Der Begriff "einstückig" kann daher synonym mit den Begriffen "integral" oder "einteilig" verwendet werden.

Eine Dichtungsplatte gemäß einem Ausführungsbeispiel kann hierbei grundsätzlich aus jedem Material gefertigt sein bzw. jedes Material umfassen, welches unter den betreffenden Betriebsbedingungen, unter denen die Dichtungsplatte eingesetzt werden soll, die notwendigen mechanischen Eigenschaften aufweist. So kann die Dichtungsplatte beispielsweise aus einem Kunststoff oder einem Elastomer gefertigt sein, beispielsweise POM (Polyoxymethylen), PUR (Polyurethan) oder anderen Polymeren. Ebenso kann eine solche Dichtungsplatte gegebenenfalls auch aus einem Gummi, beispielsweise NBR (Nitrilkautschuk bzw. Nitrile Butadiene Rubber), oder einem metallischen Werkstoff, beispielsweise einem Metall, einem Stahl oder einer Metalllegierung, gefertigt sein.

Nachfolgend werden unter Verweis auf die beigefügten Figuren Ausführungsbeispiele näher beschrieben und erläutert.
Fig. 1 zeigt eine perspektivische Darstellung einer Profilschienenführung mit einem Profilschienenwagen und einer Dichtungsplatte gemäß einem Ausführungsbeispiel;
Fig. 2 zeigt eine vergrößerte Ausschnittsdarstellung der Profilschienenführung aus Fig. 1;
Fig. 3 zeigt eine perspektivische Explosionsdarstellung einer Endplatte eines Profilschienenwagens gemäß einem Ausführungsbeispiel mit einer Dichtungsplatte gemäß einem Ausführungsbeispiel und mehreren als X-Ringen ausgefiihrten Dichtstrukturen;
Fig. 4 zeigt eine perspektivische Darstellung einer Dichtungsplatte gemäß einem Ausführungsbeispiel mit vier Aufnahmestrukturen;
Fig. 5 zeigt eine perspektivische Darstellung einer Dichtungsplatte gemäß einem Ausführungsbeispiel mit vier Dichtstrukturen;
Fig. 6 zeigt eine Dichtungsplatte gemäß einem Ausführungsbeispiel mit einer Mehrzahl von Aufnahmestrukturen, wobei nur an einem Teil der Aufnahmestrukturen eine Dichtstruktur aufgenommen ist;
Fig. 7 zeigt eine Querschnittsdarstellung durch die Dichtungsplatte aus Fig. 6;
Fig. 8 zeigt eine Dichtungsplatte gemäß einem Ausführungsbeispiel mit einer Mehrzahl von Aufnahmestrukturen, wobei nur an einem Teil der Aufnahmestrukturen eine Dichtstruktur aufgenommen ist; und
Fig. 9 zeigt eine Querschnittsdarstellung durch die Dichtungsplatte aus Fig. 8.

Bei der nachfolgenden Beschreibung der beigefiigten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgefiihrt sein, sofern sich aus der Beschreibung nicht etwas anderes explizit oder implizit ergibt.

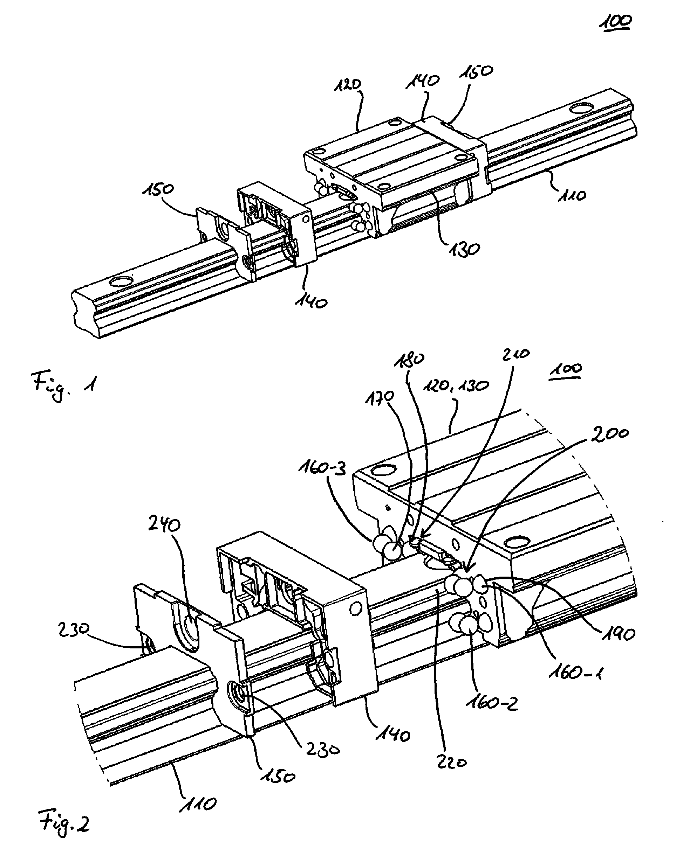

Fig. 1 zeigt eine perspektivische Darstellung einer Profilschienenführung 100 mit einer Profilschiene 110 und einem Profilschienenwagen 120 gemäß einem Ausführungsbeispiel, der auf der Profilschiene 110 angeordnet und in Fig. 1 als Teilexplosionsdarstellung zur Verdeutlichung der inneren Struktur des Profilschienenwagens 120 dargestellt ist. Der Profilschienenwagen 120 ist hierbei derart ausgebildet, dass dieser auf der Profilschiene 110 entlang ihrer Erstreckungsrichtung linear beweglich ist. Der Begriff der Linearführung bzw. der linearen Bewegung ist hierbei nicht notwendigerweise im Sinne einer Bewegung nur entlang eines Abschnitts einer Geraden zu verstehen. Vielmehr können die Profilschiene 110 und damit die Erstreckungsrichtung auch einen gebogenen Verlauf aufweisen. Daher wird anstelle des Begriffs "Erstreckungsrichtung" auch der Begriff "Erstreckungspfad" bzw. - aufgrund der beweglichen Anordnung des Profilschienenwagens 120 auf der Profilschiene 110 - der Begriff "Bewegungspfad" verwendet. Der Begriff "linear" ist daher im Sinne einer geführten, eindimensionalen Bewegung zu verstehen und nicht notwendigerweise auf eine geradenförmige Bewegung im mathematischen Sinn beschränkt.

Der Profilschienenwagen 120 umfasst einen Führungswagen 130 und zwei Endplatten 140, die beispielsweise aus einem Kunststoff, beispielsweise einem verstärkten POM (Polyoxymethylen), gefertigt sein können. Die Endplatten 140 umfassen hierbei jeweils eine Dichtungsplatte 150 gemäß einem Ausführungsbeispiel.

Zur besseren Darstellbarkeit des inneren Aufbaus des Profilschienenwagens 120 sind die in Fig. 1 links dargestellte Endplatte 140 und die dort ebenso dargestellte Dichtungsplatte 150 gemäß einem Ausführungsbeispiel entlang des Erstreckungspfads der Profilschiene 110 versetzt dargestellt.

Fig. 2 zeigt eine vergrößerte Darstellung der Profilschienenführung aus Fig. 1. Der Profilschienenwagen 120 weist in dem hier gezeigten Ausführungsbeispiel vier umlaufende Reihen von Wälzkörpern 160-1, 160-2, 160-3 und 160-4 auf, wobei die vierte Reihe von Wälzkörpern 160-4 durch die Profilschiene 110 in den Fig. 1 und 2 verdeckt wird. Selbstverständlich kann bei anderen Ausführungsbeispielen die Anzahl der Reihen von Wälzkörpern 160 variieren. So kann gegebenenfalls nur eine einzige Reihe 160, jedoch auch mehr oder weniger als die vier Reihen 160 verwendet werden. Jede Reihe von Wälzkörpern 160 weist hierbei eine Mehrzahl von Wälzkörpern 170 auf, die im vorliegenden Ausführungsbeispiel eines Profilschienenwagens als kugelförmige Wälzkörper, also als Kugeln ausgeführt sind.

Die Wälzkörper 170 laufen bei einer Bewegung des Profilschienenwagens 120 relativ zu der Profilschiene 110 in dem Profilschienenwagen 120 um. So weist der Profilschienenwagen 120 für jede Reihe 160 von Wälzkörpern einen Lastbereich 180, einen Rücklaufbereich 190 und wenigstens einen zwischen dem Lastbereich 180 und dem Rücklaufbereich 180 angeordneten Umlenkbereich 200 auf. Der Umlenkbereich 200 ist hierbei im Inneren der Endplatte 140 gebildet. Um bei dem hier gezeigten Ausführungsbeispiel ein vollständiges Umlaufen der Wälzkörper 170 zu ermöglichen, weist auch die in Fig. 2 nicht gezeigte, nur in Fig. 1 gezeigte rechte Endplatte 140 einen entsprechenden Umlenkbereich auf.

Während in dem Rücklaufbereich 190 und dem Umlenkbereich 200 die Wälzkörper 170 ausschließlich mit Komponenten des Profilschienenwagens 120 in Kontakt stehen, weist der Profilschienenwagen 120 in dem Lastbereich 180 der entsprechenden Reihe von Wälzkörpern 160 eine Laufbahn 210 auf, mit der die Wälzkörper 170 dort in Kontakt stehen. Die Profilschiene 110 weist eine der Laufbahn 210 gegenüberliegende Gegenlaufbahn 220 auf, wobei die in Fig. 2 mit dem Bezugszeichen 220 bezeichnete Gegenlaufbahn lediglich aus Darstellungsgründen nicht der Laufbahn 210 zugeordnet und dieser entsprechend nicht gegenüberliegt. Bei einer Bewegung des Profilschienenwagens 120 entlang der Profilschiene 110 bewegen sich hierbei die Wälzkörper 170 entlang der Laufbahn 210 und der Gegenlaufbahn 220, wälzen sich also an diesen entsprechend ab. Die Wälzkörper 170 bewegen sich daher im Allgemeinen mit der Hälfte einer Relativgeschwindigkeit des Profilschienenwagens 120 zu der Profilschiene 110.

Selbstverständlich können bei anderen Ausführungsbeispielen auch die Zahl der Reihen 160 der Wälzkörper 170 sowie deren Anordnung und die Ausgestaltung der Wälzkörper 170 variieren. So können beispielsweise anstelle von kugelförmigen Wälzkörpern entsprechend kegelförmige, kegelstumpfförmige, tonnenförmige, nadelförmige oder anders geformte verwendet werden. Hierbei kann es gegebenenfalls ratsam sein, die Laufbahn 210 und die Gegenlaufbahn 220 bzw. die Laufbahnen 210 und die Gegenlaufbahnen 220 an die jeweils dort eingebrachten Wälzkörper 170 und ihre Geometrie anzupassen. So kann es gegebenenfalls ratsam sein, im Falle kugelförmiger Wälzkörper 170 entsprechende Laufbahnen 210 und Gegenlaufbahnen 220 mit einem kreisbogensegmentförmigen Profil zu implementieren. Bei anders geformten Wälzkörpern kann es entsprechend ratsam sein, eine entsprechend angepasste Form der Laufbahn 210 und der Gegenlaufbahn 220 zu verwenden, wobei dies jedoch nicht zwingend ist.

Bei dem hier gezeigten Ausführungsbeispiel ist die Dichtungsplatte 150 gemäß einem Ausführungsbeispiel mit der Endplatte 140 verbunden. Dies kann beispielsweise durch eine Schraubverbindung geschehen, die jedoch in Fig. 1 und Fig. 2 zur Vereinfachung der Darstellung nicht gezeigt ist. So weist das hier gezeigte Ausführungsbeispiel einer Dichtungsplatte 150 zwei Bohrungen 230 auf, durch die entsprechende Verbindungselemente, beispielsweise Schrauben, führbar sind, um die Dichtungsplatte 150 mit der Endplatte 140 zu verbinden.

Die Bohrungen 230 können hierbei beispielsweise einen Durchmesser aufweisen, der eine Anpassung der Lage der Dichtungsplatte 150 zu der Endplatte 140 ermöglicht. Hierdurch kann gegebenenfalls eine schwimmende Aufnahme der Dichtungsplatte 150 an der Endplatte 140 und damit dem Profilschienenwagen 120 realisiert werden.

Lediglich der Vollständigkeit halber sei an dieser Stelle noch auf eine Ausnehmung 240 in der Dichtungsplatte 150 verwiesen, durch die beispielsweise ein in Fig. 2 ebenfalls nicht gezeigter Schmiermittelnippel einführbar ist, um ein ebenfalls in Fig. 2 nicht gezeigtes Schmiermittelreservoir im Bedarfsfall mit Schmiermittel zu versorgen.

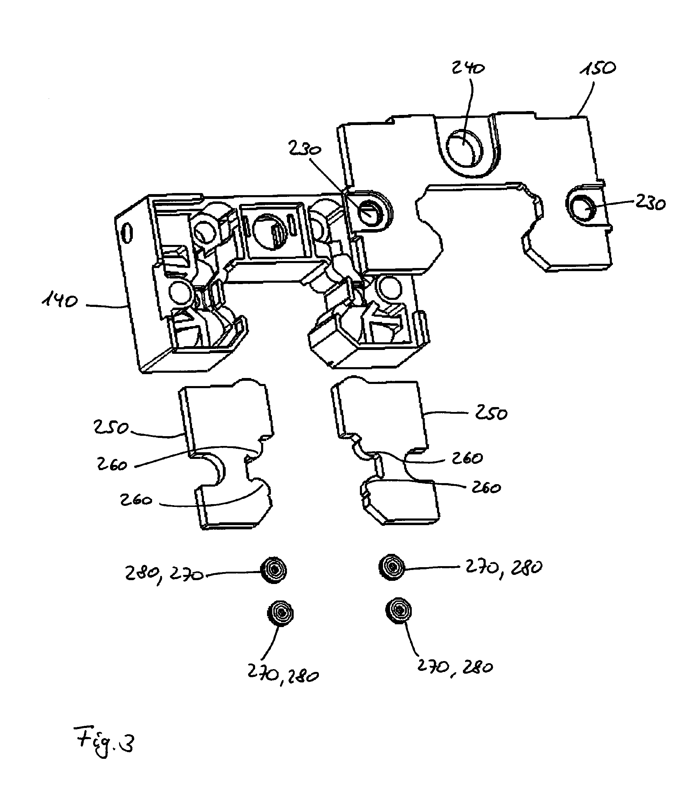

Fig. 3 zeigt eine Explosionsdarstellung des Profilschienenwagens 120 im Bereich der Endplatte 140 und der Dichtungsplatte 150.

Neben den bereits zuvor bezeichneten Komponenten der Dichtungsplatte 150 und der Endplatte 140 zeigt Fig. 3 ferner einen zweistückig ausgefertigten Schmiermittelspeicher 250, der auch als Schmierstoff- oder Schmiermittelreservoir bezeichnet wird. Dieser kann beispielsweise aus einem Schaumstoff, jedoch auch aus einem Filz gefertigt sein. Selbstverständlich können auch hier andere Implementierungen verwendet werden, sofern ein Schmiermittelspeicher 250 überhaupt notwendig oder ratsam ist. So kann beispielsweise ein Schmiermittelspeicher 250 auch einstückig ausgebildet sein.

Die beiden Teile des Schmiermittelspeichers 250 weisen für jede der vier Gegenlaufbahnen jeweils einen Vorsprung 260 auf, der bei dem hier gezeigten Ausführungsbeispiel eines Profilschienenwagens 120 unmittelbar mit der betreffenden, in Fig. 3 nicht gezeigten Gegenlaufbahn 220 in Kontakt steht. Hierdurch kann das Schmiermittel von dem Schmiermittelreservoir 250 durch die entsprechenden Vorsprünge 260 unmittelbar auf die Gegenlaufbahn 220 aufgebracht werden. Dort können die umlaufenden Wälzkörper 170 dieses zumindest teilweise aufnehmen und es kann so gegebenenfalls die Reibung der Wälzkörper im Inneren des Profilschienenwagens 120 reduziert werden.

Um nun ein Austreten des Schmiermittels über den Bereich der Profilschiene 110, auf dem sich gerade der Profilschienenwagen 120 befindet, zu verhindern, weist die Dichtungsplatte 150 in dem hier gezeigten Ausführungsbeispiel vier Dichtstrukturen 270 auf, die im konkreten Ausführungsbeispiel als X-Ringe 280 umgesetzt sind. X-Ringe weisen hierbei eine Mehrzahl von häufig als Dichtkanten implementierten Dichtflächen auf, über die diese im eingebauten Zustand mit der Gegenlaufbahn 220 der Profilschiene 110 in Kontakt stehen. Bei anderen Ausführungsbeispielen können anstelle der X-Ringe 280 auch andere Dichtstrukturen 270, beispielsweise O-Ringe oder auch W-Ringe, zum Einsatz kommen. O-Ringe weisen hierbei typischerweise nur eine Dichtfläche, beispielsweise eine Dichtkante oder Dichtlippe auf, während W-Ringe an einer Seite drei, an der anderen Seite 2 Dichtflächen aufweisen, die beispielsweise als Dichtkanten oder Dichtlippen ausgeführt sein können. So kann je nach Verwendung unterschiedlicher Dichtstrukturen 270 die Zahl der Dichtflächen an unterschiedliche Anforderungsprofile angepasst werden, die an die Dichtungsplatte 150 gestellt werden.

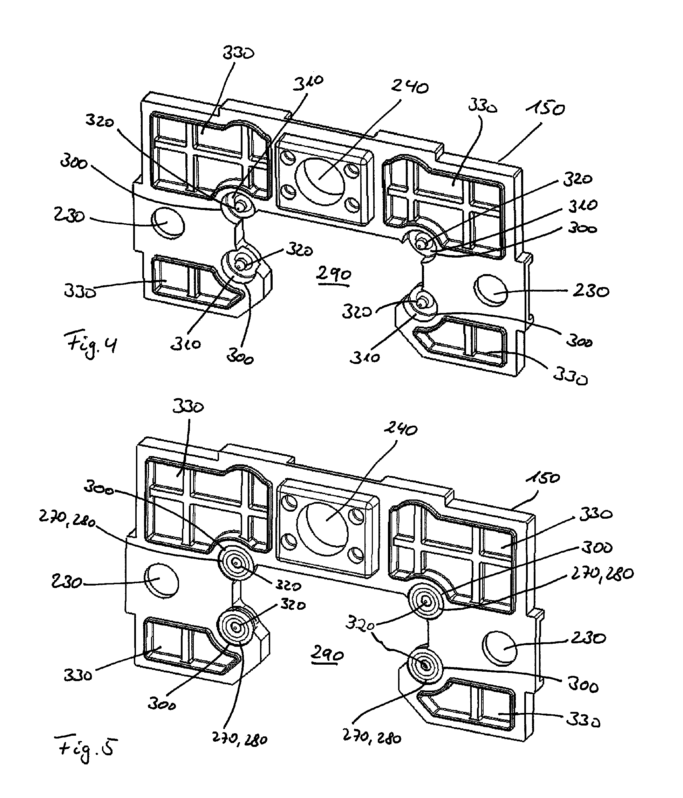

Fig. 4 zeigt eine perspektivische Darstellung einer Dichtungsplatte 150 gemäß einem Ausführungsbeispiel. Neben den bereits zuvor erläuterten Bohrungen 230 sowie der Ausnehmung 240 zeigt Fig. 4 insbesondere eine Ausnehmung 290, durch die sich die Profilschiene 110 im Falle der Montage der Dichtungsplatte 150 an den Profilschienenwagen 120 und einer entsprechenden Anordnung des Profilschienenwagens 120 auf der Profilschiene 110 erstrecken kann. Die Ausnehmung 290 weist so zumindest teilweise eine Form auf, die einer Querschnittsfläche der Profilschiene 110 entspricht bzw. sich hinsichtlich der Querschnittsfläche der Profilschiene 110 orientiert.

Darüber hinaus weist die Dichtungsplatte 150 für jede der vier Gegenlaufbahnen 220 der in Fig. 4 nicht gezeigten Profilschiene 110 eine Aufnahmestruktur 300 auf. Die Aufnahmestrukturen 300 sind hierbei derart angeordnet und ausgebildet, um die Dichtstrukturen 270, die in Fig. 4 jedoch nicht gezeigt sind, derart aufzunehmen, dass diese in dem aufgenommenen Zustand die Dichtstrukturen 270 mit der Gegenlaufbahn 220 der Profilschiene 110 in Kontakt bringen. Zu diesem Zweck weist die Dichtungsplatte 150 bei dem hier gezeigten Ausführungsbeispiel im Bereich jeder der Aufnahmestrukturen 300 eine im Wesentlichen zylinderförmige Ausnehmung 310 auf, die in die Ausnehmung 290 für die Profilschiene 110 mündet. In einem Mittelpunkt der betreffenden Ausnehmungen 310 ist jeweils ein Vorsprung 320 angeordnet, der im vorliegenden Fall wenigstens abschnittsweise zylinderförmig ausgestaltet ist. Dieser ist gerade derart ausgebildet und angeordnet, dass dieser die als X-Ringe 280 ausgeformten Dichtstrukturen 270 aufnehmen kann. Bei anderen Ausfiihrungsbeispielen kann der Vorsprung 320 auch pilzförmig ausgestaltet sein, also an einer der Dichtungsplatte 150 abgewandten Seite einen größeren Durchmesser als der zylinderförmige Abschnitt des Vorsprungs 320 aufweisen.

Die Vorsprünge 320 - unabhängig von ihrer genauen Implementierung - ermöglichen so eine form- und/oder kraftschlüssige Verbindung der Dichtstrukturen 270 mit der Dichtungsplatte 150. Diese können somit auf die Vorsprünge 320 aufgeklipst werden.

Fig. 5 zeigt die Dichtungsplatte 150 aus Fig. 4, bei der auf die Vorsprünge 320 der Aufnahmestrukturen 300 die entsprechenden Dichtstrukturen 270, also die X-Ringe 280, aufgebracht sind.

Selbstverständlich können bei anderen Ausführungsbeispielen die entsprechenden Aufnahmestrukturen 300 sowie die entsprechenden Dichtstrukturen 270 auch an andere Wälzkörpergeometrien bzw. Gegenlaufbahnen 220 und Laufbahnen 210 angepasst sein. Auch kann beispielsweise die Dichtungsplatte 150 die betreffenden Dichtstrukturen 270 bereits umfassen. Diese können also nicht nur als separate Bauteile, sondern auch integral mit der Dichtungsplatte 150 gemäß einem Ausführungsbeispiel herstellbar sein. Hierbei können die Dichtstrukturen 270 dann beispielsweise durch eine Materialschwachstelle oder eine andere Sollbruchstelle von der Dichtungsplatte 150 entfernbar sein. Die Dichtstrukturen 270 können also gegebenenfalls auch durch Zerstörung einer stoffschlüssigen Verbindung von der Dichtungsplatte 150 lösbar sein.

Unabhängig von der genauen Implementierung der Dichtstruktur 270 kann diese derart ausgebildet sein, dass diese eine oder mehrere Dichtflächen aufweist, die als Dichtlippen oder Dichtkanten umgesetzt sein können, und die mit der betreffenden Gegenlaufbahn 220 der Profilschiene 110 in Kontakt steht. Hierdurch kann die Dichtwirkung der Dichtungsplatte 150 variiert werden. Im Falle einer Dichtungsplatte 150 mit einer Aufnahmestruktur 300 kann so die Dichtwirkung gegebenenfalls auch durch eine Auswahl verschiedener Dichtstrukturen, welche durch die Aufnahmestruktur 300 haltbar sind, auf Basis der gleichen Dichtungsplatte 150 eine entsprechende Anpassung erzielbar sein. Hierdurch kann es gegebenenfalls möglich sein, eine Anzahl unterschiedlicher Teile, die bevorratet werden müssen, um unterschiedliche Dichtungsanforderungen erfüllen zu können, reduziert werden. Ebenso kann gegebenenfalls durch den Austausch der Dichtstrukturen 270 ein Widerstand, beispielsweise ein Reibungswiderstand des Profilschienenwagens 120 bzw. seiner Dichtungsplatte 150 auf einen entsprechenden Wert reduziert werden, sofern dies die Dichtheitsanforderungen zulassen. Die Dichtungsplatte 150 ist hierbei derart ausgestaltet, dass, wenn die Dichtstrukturen 270 nicht implementiert sind, ein Spalt zwischen der Dichtungsplatte 150 und der entsprechenden Gegenlaufbahn 220 der Profilschiene 110 besteht. Dieser kann beispielsweise Werte von höchstens 2 mm, höchstens 1,5 mm, höchstens 1 mm oder höchstens 0,5 mm annehmen. Bei anderen Ausführungsbeispielen kann jedoch auch der entsprechende Spalt größer sein. Darüber hinaus kann die Dichtungsplatte 150 optional auch so ausgebildet sein, dass die Ausnehmung 290 zu der Profilschiene 110 einen entsprechenden Abstand aufweist, der ebenso die zuvor genannten Werte maximal annimmt. Hierdurch kann also die Dichtungsplatte 150 als Spaltdichtungsplatte konzipiert sein, wenn die Dichtstrukturen 270 nicht implementiert sind, durch ein Einsetzen derselben jedoch zu einer Leichtlaufdichtung umgebaut werden, bei der zumindest bezüglich der Gegenlaufbahn eine berührende Dichtung vorliegt.

Die Fig. 4 und 5 zeigen die Dichtungsplatte 150 jeweils von innen, also von einer dem Führungswagen 130 zugewandten Seite. Entsprechend weist die Endplatte 140, wie sie in den Fig. 4 und 5 gezeigt ist, mehrere Ausnehmungen 330 auf, die mithilfe von Versteifungsrippen verstärkt sind. Die Ausnehmungen 330 dienen hierbei zumindest teilweise einer Aufnahme der in Fig. 4 und 5 nicht gezeigten Schmiermittelspeicher 250. So kann beispielsweise durch ihre Implementierung eine entsprechend größere Schmiermittelmenge in den Schmiermittelspeichern 250 gegebenenfalls aufnehmbar sein.

Mithilfe einer Dichtungsplatte 150 gemäß einem Ausführungsbeispiel kann so eine alternative Dichtung zusammen mit einer Deckscheibe für einen Profilschienenwagen 120 implementiert werden. Hierdurch kann es gegebenenfalls möglich sein, einen zusätzlichen Bauraum trotz unterschiedlicher Dichtungskonzepte zu reduzieren. Die Dichtungsplatte 150 kann also mehrere Funktionen bzw. mehrere Grade der Dichtheit durch entsprechende Bestückung mit Dichtstrukturen 270 oder deren Entfernung ermöglichen. Es handelt sich daher um eine Dichtungsplatte mit einer Mehrfachfunktion.

Durch die beschriebene Technik kann nicht nur die Art der Dichtung flexibler gestaltet werden, es kann vielmehr auch eine Höhe der mit ihr einhergehenden Reibungskräfte einstellbarer sein. So kann durch das Entfernen, Hinzufiigen oder Austauschen der Dichtstrukturen 270 auch diesbezüglich flexibler agiert werden, und Wünsche des Kunden hinsichtlich einer bestimmten Reibungskraft gegebenenfalls unter Reduzierung der Dichtfunktion implementiert werden. Steht so beispielsweise bei einer Anwendung eine möglichst geringe Reibungskraft im Vordergrund, kann gegebenenfalls diese zulasten einer geringeren Dichtfunktion implementiert werden.

Eine Dichtungsplatte 150 gemäß einem Ausführungsbeispiel stellt so bei vielen Anwendungen eine Spaltdichtung dar, wenn die entsprechenden Dichtstrukturen 270 nicht implementiert sind. Sie kann daher gegebenenfalls keinen Kontakt zu der Profilschiene 110 aufweisen, kann jedoch während des Montageprozesses häufig einfach und schnell zu einer entsprechenden Leichtlaufdichtung mit wenigstens einer Dichtstruktur 270 umgebaut werden. Durch die Zugabe von kleinen, beispielsweise handelsüblichen Dichtstrukturen in Form von X-Ringen, O-Ringen oder auch W-Ringen, die auf dem Markt in unterschiedlichen Shore-Härten verfiigbar sind, kann gegebenenfalls flexibel dem Wunsch eines Kunden herstellerseitig begegnet werden. Bei manchen Dichtungsplatten 150 kann so die Dichtungsfunktion gerade auf den Bereich begrenzt werden, wo die Dichtung aufgrund des Auftrags des Schmiermittels am meisten benötigt wird, nämlich auf den Bereich der Laufbahn 210 und der entsprechenden Gegenlaufbahn 220.

Ausführungsbeispiele einer Dichtungsplatte 150 können so von einer Spaltdichtung relativ schnell und einfach zu einer Leichtlaufdichtung umgebaut werden. Bei vielen Ausführungsbeispielen ist für den entsprechenden Umbau häufig nur der Einsatz vergleichsweise einfacher, handelsüblicher W-, X- oder O-Ringe erforderlich, die aus verschiedenen Materialien bezogen bzw. gefertigt werden können. Hierdurch kann also nicht nur die Dichtungsfunktionalität der Dichtungsplatte 150 eingestellt werden, es ist vielmehr gegebenenfalls auch möglich, zumindest in bestimmten Bereichen die sich durch diese ergebende Reibungskraft einzustellen.

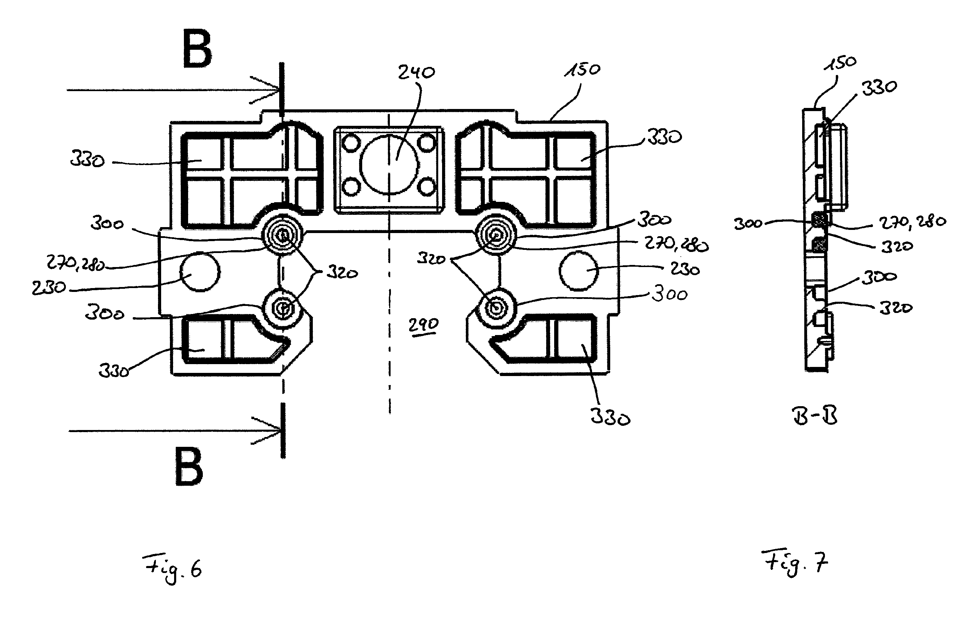

Wie im Nachfolgenden im Zusammenhang mit den Fig. 6 bis 9 noch näher erläutert wird, kann bei Bedarf gegebenenfalls auch nur gezielt die Dichtungsfunktion auf einzelne bzw. mehrere Laufbahnen 210 und ihre entsprechenden Gegenlaufbahnen 220 begrenzt werden. Wird beispielsweise ein entsprechender Profilschienenwagen 120 waagerecht eingesetzt, sind häufig die oben liegenden Laufbahnen anfälliger für eine Verschmutzung. In einem solchen Fall kann gegebenenfalls die Implementierung der Dichtstrukturen 270 nur im Bereich der oberen Laufbahnen 210, 220 erfolgen. Anders ausgedrückt kann die berührende Dichtungsfunktion beispielsweise nur für die oberen Laufbahnen, beispielsweise zur Reibungsreduktion im Falle eines waagerechten oder auch anders ausgerichteten Einbaus umgesetzt werden. Bei einer entsprechenden, beispielsweise um 90° gedrehten Einbaulage kann entsprechend die Bestückung der Dichtungsplatte 150 mit den Dichtstrukturen 270 variiert werden.

So zeigt Fig. 6 eine Aufsicht auf die bereits in Fig. 4 und 5 gezeigte Dichtungsplatte 150. Während jedoch insbesondere bei der in Fig. 5 dargestellten Bestückung der Dichtungsplatte 150 die Dichtungsfunktion für alle vier Laufbahnen implementiert ist, zeigt Fig. 6 eine Variation der Leichtlaufdichtung, bei der nur die oberen Laufbahnen (nicht gezeigt in Fig. 6) im Hinblick auf eine Reibungsreduktion bei einem beispielsweise waagerechten Einbau mit den Dichtstrukturen 270 bestückt sind. Im Unterschied hierzu sind die unteren Aufnahmestrukturen 300 gerade nicht mit Dichtstrukturen 270, also beispielsweise den X-Ringen 280, bestückt.

Fig. 7 verdeutlicht dies auch an einer Querschnittsdarstellung durch die in Fig. 6 gezeigte Querschnittsebene BB. So zeigt Fig. 7 gerade, dass die dort oben gezeigte Aufnahmestruktur 330 den X-Ring 280, also die Dichtstruktur 270 aufgenommen hat, während die untere Aufnahmestruktur 300 leer ist. Dort erstreckt sich der Vorsprung 320 ohne von einer Dichtstruktur 270 umgeben zu sein.

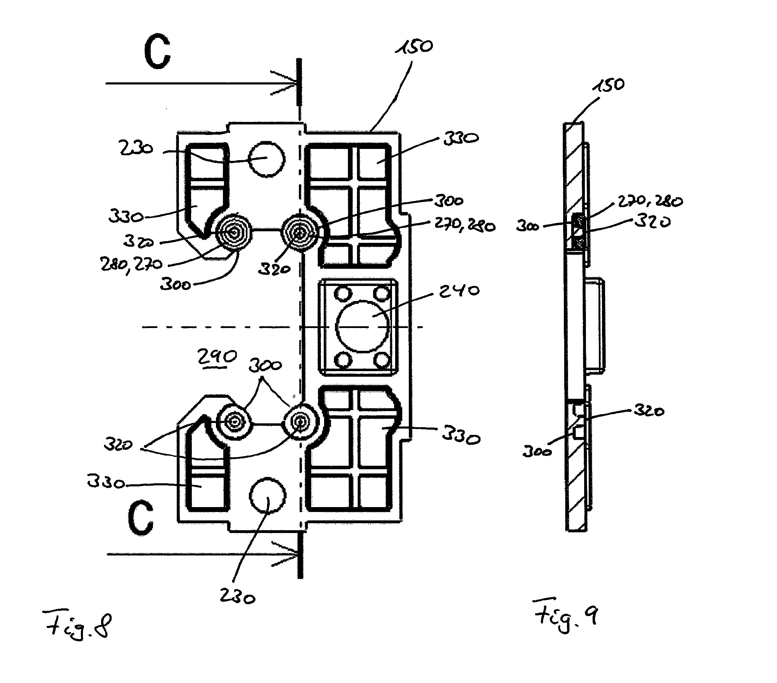

Fig. 8 zeigt eine weitere Variation der Dichtungsplatte 150 bei einem horizontalen Einbau. Die in Fig. 8 dargestellte Einbaulage der Dichtungsplatte 150 kann so beispielsweise im Falle eines Einbaus an eine Wand implementiert werden, wobei die Wand gegenüber einer Bodenfläche einen Winkel von beispielsweise 90° aufweist. Die in Fig. 8 dargestellte Einbaulage wird daher gegebenenfalls auch als waagerechte Wandeinbaulage bezeichnet.

Auch bei dieser Ausgestaltung sind in der hier gezeigten Variation nur die oberen Laufbahnen mit einer entsprechenden Dichtungsfunktionalität über die Dichtstrukturen 270 versehen. Auch hier kann wiederum eine entsprechende Reduzierung der Dichtungsfunktionalität aufgrund der Reibungsreduktion erfolgen.

Entsprechend zeigt auch die in Fig. 9 dargestellte Querschnittsdarstellung entlang der Querschnittsebene CC, dass die obere Aufnahmestruktur 300 mit ihrem Vorsprung 320 von dem X-Ring 280 bzw. der Dichtstruktur 270 umgeben ist, während die untere Aufnahmestruktur 300 mit ihrem Vorsprung 320 gerade nicht bestückt ist.

Die Fig. 6 bis 9 illustrieren daher, dass, auch wenn eine Dichtungsplatte 150 eine Mehrzahl von Aufnahmestrukturen 300 umfasst, bei Weitem nicht jede derselben mit einer entsprechenden Dichtstruktur 270 implementiert sein muss. So kann gegebenenfalls auch nur ein Teil der Mehrzahl der Aufnahmestrukturen 300 im Falle einer entsprechenden Implementierung einer Dichtstruktur 270 mit einer solchen bestückt sein.

Eine Dichtungsplatte 150 gemäß einem Ausführungsbeispiel kann - wie zuvor im Zusammenhang bereits mit den Bohrungen 230 erläutert wurde - an dem Profilschienenwagen 120 oder auch seiner Endplatte 140 schwimmend eingebaut werden. Zu diesem Zweck sind die Bohrungen 230 häufig etwas größer ausgelegt, als dies für die eigentlich verwendeten Schrauben oder anderen Befestigungsmittel notwendig wäre. Diese Konstruktion kann gegebenenfalls im Zusammenhang mit der hier beschriebenen Dichtungsplatte 150 weitere positive Effekte ermöglichen. So kann gegebenenfalls durch den Einsatz der Vorsprünge 320, die auch als Haltenasen oder Haltestifte für die Dichtstrukturen 270 verwendet werden, eine Deformation des Schmiermittelspeichers 250 gegebenenfalls vermieden werden. Anders ausgedrückt kann gegebenenfalls der aus einem Filz oder einem anderen Material gefertigte Schmiermittelspeicher 250 aufgrund der Implementierung der Vorsprünge 320 hinsichtlich seiner Formstabilität verbessert werden.

Darüber hinaus kann es gegebenenfalls ebenfalls möglich sein, wenn alle Dichtstrukturen 270, also im vorliegenden Fall alle X-Ringe 280, eingesetzt werden, dass die Dichtungsplatte 150 bei einer Montage auf einer Masterschiene oder einer anderen Profilschiene automatisch zentriert wird. Hierdurch kann es gegebenenfalls möglich sein, eine aufwendige Justage der Dichtungsplatte 150 an dem Profilschienenwagen bzw. der Profilschiene zu vermeiden und so die zuvor beschriebenen Spaltdichtungen genauer einzustellen.

Eine Dichtungsplatte 150 gemäß einem Ausführungsbeispiel kann so eine Verbesserung der Flexibilität einer Dichtungsanpassung bei einem Profilschienenwagen 120 mit technisch einfachen Mitteln ermöglichen.

Die in der vorstehenden Beschreibung, den Ansprüchen und den Zeichnungen offenbarten Merkmale können sowohl einzeln, wie auch in beliebiger Kombination für die Verwirklichung eines Ausführungsbeispiels in ihren verschiedenen Ausgestaltungen von Bedeutung und implementiert sein.

### Bezugszeichenliste

| | |
|---|---|
| 100 | Profilschienenführung |
| 110 | Profilschiene |
| 120 | Profilschienenwagen |
| 130 | Führungswagen |
| 140 | Endplatte |
| 150 | Dichtungsplatte |
| 160 | Reihe von Wälzkörpern |
| 170 | Wälzkörper |
| 180 | Lastbereich |
| 190 | Rücklaufbereich |
| 200 | Umlenkbereich |
| 210 | Laufbahn |
| 220 | Gegenlaufbahn |
| 230 | Bohrung |
| 240 | Ausnehmung |
| 250 | Schmiermittelspeicher |
| 260 | Vorsprung |
| 270 | Dichtstruktur |
| 280 | X-Ring |
| 290 | Ausnehmung |
| 300 | Aufnahmestruktur |
| 310 | Ausnehmung |
| 320 | Vorsprung |
| 330 | Ausnehmung |

## Patentansprüche

1. Dichtungsplatte (150) für einen Profilschienenwagen (120), wobei der Profilschienenwagen (120) ausgebildet ist, um auf einer Profilschiene (110) linear beweglich zu sein, und wobei der Profilschienenwagen (120) wenigstens einen Lastbereich (180) umfasst, in dem eine Mehrzahl von Wälzkörpern (170) zwischen einer Laufbahn (210) des Profilschienenwagens (120) und einer Gegenlaufbahn (220) der Profilschiene (110) angeordnet sind, mit folgenden Merkmalen:
einer Ausnehmung (240), die derart ausgebildet ist, sodass sich in einem an dem Profilschienenwagen (120) montierten Zustand der Dichtungsplatte (150) die Profilschiene (110) durch die Ausnehmung (240) hindurch erstrecken kann; und
wenigstens eine Aufnahmestruktur (300), die derart angeordnet und ausgebildet ist, um eine Dichtstruktur (270) derart aufzunehmen, dass in dem aufgenommenen Zustand die Dichtstruktur (270) mit der Gegenlaufbahn (220) der Profilschiene (110) in Kontakt steht,
wobei die Dichtungsplatte (150) derart ausgebildet ist, dass diese zu der Gegenlaufbahn (220) einen Spalt aufweist, wenn die Dichtstruktur (270) nicht an der Aufnahmestruktur (300) aufgenommen ist.

2. Dichtungsplatte (150) nach Anspruch 1, bei der die Ausnehmung (240) derart ausgebildet ist, dass diese zu der Profilschiene (110) berührungsfrei an dem Profilschienenwagen (120) anbringbar ist.

3. Dichtungsplatte (150) nach einem der vorhergehenden Ansprüche, bei der die Aufnahmestruktur (300) einen wenigstens abschnittsweise zylinderförmigen Vorsprung (320) umfasst, der ausgebildet ist, um eine Dichtstruktur (270) mit einer runden Öffnung, beispielsweise einen O-Ring, einen X-Ring (280) oder einen W-Ring, aufzunehmen.

4. Dichtungsplatte (150) nach einem der vorhergehenden Ansprüche, die eine Mehrzahl von Aufnahmestrukturen (300) aufweist, die derart ausgebildet sind, dass jede der Aufnahmestrukturen (300) bei einer Montage an einem Profilschienenwagen (120) mit einer Mehrzahl von Lastbereichen (180) und einer Mehrzahl von Laufbahnen (210) im Zusammenspiel mit einer Profilschiene (110) mit einer Mehrzahl von Gegenlaufbahnen (220) eine Dichtstruktur (270) derart aufnehmen kann, dass diese in dem aufgenommenen Zustand mit der betreffenden Gegenlaufbahn (220) in Kontakt steht und in einem nicht aufgenommenen Zustand zu dieser einen Spalt aufweist.

5. Kombinationsprodukt umfassend eine Dichtungsplatte (150) gemäß einem der vorhergehenden Ansprüche und wenigstens einer Dichtungsstruktur (270).

6. Dichtungsplatte (150) für einen Profilschienenwagen (120), wobei der Profilschienenwagen (120) ausgebildet ist, um auf einer Profilschiene (110) linear beweglich zu sein, und wobei der Profilschienenwagen (120) wenigstens einen Lastbereich (180) umfasst, in dem eine Mehrzahl von Wälzkörpern (170) zwischen einer Laufbahn (210) des Profilschienenwagens (120) und einer Gegenlaufbahn (220) der Profilschiene (110) angeordnet sind, mit folgenden Merkmalen:
einer Ausnehmung (240), die derart ausgebildet ist, sodass sich in einem an dem Profilschienenwagen (120) montierten Zustand der Dichtungsplatte (150) die Profilschiene (110) durch die Ausnehmung (240) hindurch erstrecken kann; und wenigstens einer entfernbaren Dichtstruktur (270), die derart angeordnet ist, dass diese mit der Gegenlaufbahn (220) der Profilschiene (110) in Kontakt steht,
wobei die Dichtungsplatte (150) derart ausgebildet ist, dass diese zu der Gegenlaufbahn (220) einen Spalt aufweist, wenn die Dichtstruktur (270) von der Dichtungsplatte (150) entfernt ist.

7. Dichtungsplatte (150) nach Anspruch 6, die ferner derart ausgebildet ist, um nach einem Entfernen der Dichtstruktur (270) wieder eine oder die Dichtstruktur (270) an der Dichtungsplatte (150) befestigbar zu machen.

8. Dichtungsplatte (150) nach einem der Ansprüche 6 oder 7, bei der die Dichtstruktur (150) eine Mehrzahl von Dichtflächen aufweist, die derart angeordnet sind, dass diese in dem montierten Zustand mit der Gegenlaufbahn (220) in Kontakt stehen.

9. Dichtungsplatte (150) nach einem der Ansprüche 6 bis 8, bei der die Dichtstruktur (270) wenigstens eine Dichtfläche mit einer einem Profil der Gegenlaufbahn (220) angepassten Querschnittsform aufweist.

10. Profilschienenwagen (120) mit folgenden Merkmalen:
wenigstens einem Lastbereich (180), wobei der Lastbereich (180) eine Laufbahn (210) umfasst, die derart ausgebildet ist, dass zwischen dieser und einer Gegenlaufbahn (220) einer Profilschiene (110) eine Mehrzahl von Wälzkörpern (170) derart angeordnet werden kann, dass der Profilschienenwagen (120) auf der Profilschiene (110) linear beweglich ist und die Wälzkörper (170) der Mehrzahl von Wälzkörpern (170) an der Laufbahn (210) und der Gegenlaufbahn (220) bei einer Bewegung abrollen, und
wenigstens einer Dichtungsplatte (150) nach einem der Ansprüche 1 bis 4 oder 6 bis 9.
